Europäisches Patentamt

European Patent Office

Office européen des brevets

(11) Publication number: **0 203 425**
**A1**

(12) # EUROPEAN PATENT APPLICATION

(21) Application number: **86106230.5**

(22) Date of filing: **06.05.86**

(51) Int. Cl.⁴: **C09J 3/14** , C08L 23/08 ,
C08L 33/08 , C08L 53/02 ,
B32B 27/00

(30) Priority: **13.05.85 US 733077**

(43) Date of publication of application:
**03.12.86 Bulletin 86/49**

(84) Designated Contracting States:
**DE FR GB IT·NL**

(71) Applicant: **GENERAL ELECTRIC COMPANY**
**1 River Road**
**Schenectady New York 12305(US)**

(72) Inventor: **Giles, Harold Frazee**
**Wilshire Drive**
**Cheshire Massachusetts 01225(US)**
Inventor: **Bookbinder, Dana Craig**
**75 Pommeroy Avenue**
**Pittsfield Massachusetts 01201(US)**
Inventor: **Gallucci, Robert Russell**
**68 Winesap Road**
**Pittsfield Massachusetts 01201(US)**

(74) Representative: ·Catherine, Alain
**General Electric - Deutschland Munich**
**Patent Operations Frauenstrasse 32**
**D-8000 München 5(DE)**

(54) **Composition of a copolymer of an olefin and an acrylate monomer and a block copolymer of vinylaromatic and aliphatic diene.**

(57) A composition comprising an admixture of a copolymer of an olefin and an acrylate monomer and a block copolymer of a vinylaromatic and an aliphatic diene. Multilayer structure of a polycarbonate outer layer, a polyolefin outer layer and a tie layer disposed between the outer layers, the tie layer comprising a block copolymer of a vinylaromatic and an aliphatic diene.

COMPOSITION

## BACKGROUND OF THE INVENTION

Multilayer compositions have been utilized for many years. The concept of a multilayer is that the positive properties of two or more materials are combined with the structural integrity of each material being essentially uncompromised. Usually the positive properties of one material off-set or counter balance the weaker properties of the second material. For example, among the positive properties of polycarbonate are high heat resistance and impact strength. However polycarbonate has a relatively high transmission rate for certain gases, oxygen and carbon dioxide for example. Polyvinyl chloride does not have very high resistance to impact or heat but has excellent resistance to the transmission of oxygen and carbon dioxide. Therefore a multilayer composition utilizing polycarbonate adjacent to polyvinylchloride can be employed in structures wherein the properties of high impact resistance, high heat resistance and high resistance to oxygen and carbon dioxide transmission are necessary.

Although many of these multilayer compositions can be hypothesized on the basis of laminating a material possessing certain strong properties with a material having weaknesses in those same property areas, certain practical considerations inhibit successful implementation of this theory. The two materials are in intimate contact at their interface. This juncture or interface should provide a sufficiently strong interaction with respect to the processing conditions which the multilayer structure undergoes that a tight, firm bond is maintained. Such conditions to which the multilayer can be exposed include heat, pressure, humidity, liquid chemicals, gases and the like or various combinations of these conditions. The propensity of the two layers to maintain this tight, firm bond is generally known as the "compatibility" of the two layers. When the two materials are incompatible, the utility of the multilayer structure is severely inhibited or useless. In order to bind two relatively incompatible layers, a tie layer is generally employed joining the two incompatible layers by "tieing" them together. This tie layer usually enjoys good compatibility with both incompatible layers and is aligned between the two incompatible layers.

Aromatic polycarbonate is a particularly useful material for multilayer technology because of its high heat and impact resistance. However, it is incompatible to a varying degree with a number of other resins. Of particular concern is its incompatibility with olefin containing resins.

A novel tie material has been developed. This tie material is particularly effective for tieing aromatic polycarbonate with olefin containing polymers. This tie layer provides a multilayer structure with very good peel strength both before and after exposure to hydrolytic conditions.

## DESCRIPTION OF THE INVENTION

In accordance with the invention there is a multilayer structure comprising an outer layer of aromatic polycarbonate and an outer layer of a polymer prepared from an olefinic monomer, said outer layers tied together with a layer comprising a block copolymer of a vinylaromatic and aliphatic diene.

In further accordance with the invention, there is a novel composition of matter which comprises an admixture of a copolymer of an olefin and an acrylate monomer and block copolymer of vinylaromatic and an aliphatic diene.

Aromatic polycarbonates are prepared in the conventional manner by reacting a dihydric phenol with a carbonate precursor in an interfacial polymerization process or transesterification. Typical of some of the dihydric phenols that may be employed in the practice of this invention are 2,2-bis-(4-hydroxyphenyl)propane (bisphenol-A), (2,2-bis(4-hydroxy-3-methylphenyl)propane, 4,4-bis(4-hydroxyphenyl)heptane, 2-2(3,5,3',5'-tetrachloro-4,4'-dihydroxydiphenyl)propane, 2,2-(3,5,3',5'-tetrabromo-4,4'-dihydroxydiphenyl)propane, (3,3'-dichloro-4,4'-dihydroxyphenyl)methane, bis 4-hydroxy phenyl sulfone, bis 4-hydroxy phenyl sulfide, 1,1-bis(4-hydroxyphenyl)cyclohexane, 4,4'-thiodiphenol, bis (4-hydroxyphenyl)ether, p,p'-dihydroxydiphenyl, and bis (3,5-diisopropyl-4-hydroxyphenyl)sulfone. Other dihydric phenols of the bisphenol type are also available and are disclosed in U.S. Patent Nos. 2,999,835; 3,028,365; 3,334,154; 3,027,365; 3,035,021; 3,036,036 and 4,111,910. Bisphenol-A is preferred.

It is, of course, possible to employ two or more different dihydric phenols or a copolymer of a dihydric phenol with a glycol or with hydroxy or acid terminated polyester, or with a dibasic acid in the event a carbonate copolymer or interpolymer rather than a homopolymer is desired for use in the preparation of the aromatic carbonate polymers of this invention. Also employed in the practice of this invention may be blends of any of the above materials to provide the aromatic carbonate polymer.

The carbonate precursor may be either a carbonyl halide, a carbonate ester or a haloformate. The carbonyl halides which can be employed herein are carbonyl bromide, carbonyl chloride and mixtures thereof. Typical of the carbonate esters which may be employed herein are diphenyl carbonate, di-(halophenyl) carbonates such as di-(chlorophenyl) carbonate, di-(bromophenyl) carbonate, di-(trichlorophenyl) carbonate, di-(tribromophenyl) carbonate, etc., di-(alkylphenyl) carbonate such as di(tolyl) carbonate, etc., di-(naphthyl) carbonate, di-(chloronaphthyl) carbonate, phenyl tolyl carbonate, chlorophenyl chloronaphthyl carbonate, etc., or mixtures thereof. The haloformates suitable for use herein include bis-haloformates of dihydric phenols (bis-chloroformates of hydroquinone), or glycols (bis-haloformates of ethylene glycol, neopentyl glycol, polyethylene glycol, etc.). While other carbonate precursors will occur to those skilled in the art, carbonyl chloride, also known as phosgene, is preferred.

The aromatic polycarbonates of this invention may be prepared by employing a molecular weight regulator, an acid acceptor and a catalyst. The molecular weight regulators which can be employed in carrying out the process of this invention include monohydric phenols such as phenol, chroman-l, paratertiarybutylphenol, para-bromophenol, primary and secondary amines, etc.

A suitable acid acceptor may be either an organic or an inorganic acid acceptor. A suitable organic acid acceptor is a tertiary amine and includes such materials as pyridine, triethylamine, dimethylaniline, tributylamine, etc. The inorganic acid acceptor may be one which can be either a hydroxide, a carbonate, a bicarbonate, or a phosphate or an alkali or alkaline earth metal.

The catalysts which are employed herein can be any of the suitable catalysts that aid the polymerization of bisphenol-A with phosgene. Suitable catalysts include tertiary amines such as, for example, triethylamine, tripropylamine, N,N-dimethylaniline, quaternary ammonium compounds such as, for example, tetraethylammonium bromide, cetyl triethyl ammonium bromide, tetra-n-heptyl-ammonium iodide, tetra-n-propyl ammonium; bromide, tetramethylammonium chloride, tetramethyl ammonium hydroxide, tetra-n-butylammonium iodide, benzyltrimethylammonium chloride and quaternary phosphonium compounds such as, for example, n-butyltriphenyl phosphonium bromide and methyltriphenyl phosphonium bromide.

Also included herein are branched polymers wherein a polyfunctional aromatic compound is reacted with the dihydric phenol and carbonate precursor to provide a thermoplastic randomly branched polycarbonate polymer.

These polyfunctional aromatic compounds contain at least three functional groups which are carboxyl, carboxylic anhydride, haloformyl, hydroxyl - (polyfunctional phenols) or mixtures thereof. Examples of these polyfunctional aromatic compounds which may be employed in the practice of this invention include: trimellitic anhydride, trimellitic acid, trimellityl trichloride, 4-chloroformyl phthalic anhydride, pyromellitic acid, pyromellitic dianhydride, mellitic acid, mellitic anhydride, trimesic acid, benzophenonetetracarboxylic acid, benzophenonetetracarboxylic anhydride and the like. The preferred polyfunctional aromatic compounds are trimellitic anhydride or trimellitic acid, or their haloformyl derivatives.

Also, included herein are blends of a linear polymer and a branched polymer.

Within the definition of aromatic polycarbonates are also copolyestercarbonates, that is the polymer made from a dihydric phenol, a dibasic acid and a phosgene precursor. U.S. Patent 3,169,121 covering copolyestercarbonates and methods of preparing them is hereby incorporated by reference.

The other outer layer in the multilayer structure is a polyolefin. Typical of the polyolefins are polyethylene, polypropylene, polybutylene, polyisobutylene or any of the olefin monomers having from two to about ten carbon atoms, preferably from two to about eight carbon atoms. Copolymers of the above may be employed, and are included within the term polyolefin. Examples of copolymers include copolymers of ethylene and propylene or ethylene and butene. The term copolymers includes the usual copolymers, that is, random, random-block and block copolymers. Various densities of polyolefins can be employed in this invention and include high density polyethylene, linear low density polyethylene and low density polyethylene. The preferred polyolefin is polypropylene.

The internal tie layer joining together the aromatic polycarbonate and the polyolefin outer layers comprises a block copolymer of a vinylaromatic and an aliphatic diene.

The block copolymers of the tie layer are of the linear, sequential or radial teleblock composition, are well known in the art, and are generally commercially available or may be readily prepared by known methods.

One of the blocks of these polymers comprise homopolymers or copolymers prepared from vinylaromatic hydrocarbons wherein the aromatic moiety can be either monocyclic or polycyclic. Typical monomers include styrene, alpha-methyl styrene, p-methyl styrene, vinyl xylene, ethyl vinyl xylene, vinyl naphthylene, and the like, or mixtures thereof. Assuming more than one block of vinylaromatic the blocks may be the same or different. They are preferably selected from styrene, alpha-methyl styrene, vinyl toluene, vinyl xylene, vinyl naphthylene, and especially styrene. The block of aliphatic diene may be derived from, for example, butadiene, isoprene, 1,3-pentadiene, 2,3-dimethylbutadiene, and the like, and it may have a linear, sequential or teleradial structure. As generally prepared, the aliphatic diene block of the polymer will have residual unsaturation present. Examples of such commercially available polymers are the KRO3 series available from Phillips, Stereon 840A available from Firestone and Kraton D available from Shell Chemical. For purposes of this invention, essentially all this residual unsaturation can undergo selective hydrogenation procedures whereby essentially all the unsaturation in the vinylaromatic block(s) is maintained. The selectively hydrogenated linear block copolymers are described in Haefel, et al., U.S. Patent 3,333,024. These selectively hydrogenated copolymers are commercially available from Shell as the Kraton·G series such as Kraton G1650, Kraton G1651 and Kraton G1652.

The copolymers can be random blocks, diblock, or triblock. An example of a commercially available random block is Stereon 840A, a copolymer of styrene and butadiene. An example of a diblock copolymer is Solprene, available from Phillips, a diblock of styrene and butadiene. Examples of triblock copolymer, such as styrene-butadiene-styrene are the Phillips KRO3 line and the Shell Kraton G and Kraton D lines, wherein the residual unsaturation of the aliphatic diene has been essentially removed by selective hydrogenation in the Kraton G series.

The ratio of the copolymers in the triblock copolymer and the average molecular weights can vary broadly in the triblock copolymer, although the molecular weight of the aliphatic diene block should be greater than that of the combined terminal blocks. It is preferred to form the terminal block each having a weight average molecular weight of about 2,000 to about 60,000 and center block, e.g. a hydrogenated or non-hydrogenated polybutadiene block, with a weight average molecular weight of about 20,000 to 450,000. Still more preferably, the terminal blocks each have a weight average molecular weight of about 7,000 to about 35,000 while the hydrogenated or non-hydrogenated polybutadiene polymer blocks have a weight average molecular weight between about 30,000 and 150,000. The terminal blocks will preferably comprise from about 10 to about 45% by weight, more preferably from about 14 to about 40% by weight of the total block copolymer. The preferred copolymers will be those having a polybutadiene center block wherein from about 35 to about 55% of the butadiene block segment is the structure resulting from 1,2 addition.

The hydrogenated copolymer will have the average aliphatic unsaturation reduced to less than 20% of the original value. It is preferred to have the unsaturation of the center block reduced to 10%, or less, preferably 5%, or less, of its original value. After hydrogenation center blocks derived from butadiene will have the ethylene butylene structure.

The block copolymers are formed by techniques well known to those skilled in the art. Hydrogenation may be conducted utilizing a variety of known hydrogenation catalysts such as nickel on kieselghur, Raney nickel, copper chromate, molybdenum sulfide and finely divided platinum or other noble metals on a low surface area carrier.

Hydrogenation may be conducted at any desired temperature or pressure, e.g., from atmospheric to about 210 Kg/Cm². The usual range being between 7 and 70 Kg/cm² at temperatures from 24°C to 316°C for times between 0.1 and 24 hours, preferably from 0.2 to 8 hours.

Hydrogenated block copolymers such as Kraton G-1650, Kraton G-1651 and Kraton G-1652 from Shell Chemical Company, Polymers Division, have been found useful in the present invention. Also useful are the Solprenes of Phillips.

The radial teleblock copolymers of which the Solprenes are typical examples can be characterized as having at least three polymer branches with each branch of the radial block polymer comprising terminal non-elastomeric segments, as defined hereinafore. The branches of the radial block polymer contain a terminal non-elastomeric segment attached to an elastomeric polymer segment, as defined hereinafore. These are described in Marrs, U.S. Patent 3,735,936 and in Zelinski, U.S. Patent 3,281,383, and they are selectively hydrogenated by well known procedures. In any event, the term "selective hydrogenation" is used herein to contemplate polymers in which the aromatic blocks have been left unhydrogenated.

The molecular weight of the triblock copolymer should be selected so that the tie layer will be easily processed together with the polycarbonate and the polyolefins. Kraton G-1652 is therefore preferred over Kraton G-1651, both available from Shell since the higher molecular weight of 1651 makes it more difficult to extrude, particularly at extended residence times.

The diblock copolymer such as Solprene can also be employed in the invention. Generally the vinylaromatic portion is from about 20 to 40 weight percent of the polymer, the remainder of the polymeric unit being the aliphatic diene. The random block copolymer such as Stereon 840A is made up of various unit blocks of varying length. Although referred to generally as a random block copolymer, Stereon 840A may be tapered as well, that is a block of styrene followed by a block of butadiene followed by a shorter block of styrene than the first block which is followed by a shorter block of butadiene than the first block followed by a still shorter block of styrene, etc. The quantity of vinylaromatic such as styrene is generally from about 20 to about 50 weight percent. In Stereon 840A, the weight percent of styrene is 43%. Other polymer may also be present in the tie layer in admixture with the block copolymers of vinylaromatic and aliphatic diene. Of particular note is the copolymer of olefin and acrylate monomer. These admixtures provide significant peel strength of the structures even after autoclaving at 270°F for 20 minutes.

The olefin concentration in the olefin acrylate is generally from about 90 to about 60 weight percent, preferably from about 70 to about 85 weight percent. The olefin employed is any of the olefins previously mentioned for the polyolefin. However an olefin of from two to about four carbon atoms is preferred. Ethylene is the most preferred olefin. The acrylate has an alkyl or cycloalkyl ester group. The alkyl is normal or branched and is generally from one to six carbon atoms, inclusive. Examples of alkyl include methyl, ethyl, isopropyl, tertiary butyl, neopentyl and n-hexyl. Normal alkyl groups are preferred. Generally, cycloalkyl groups of from four to six carbon atoms, inclusive can be employed and include cyclo butyl, cyclopentyl and cyclohexyl. Preferred acrylate are methylacrylate and ethylacrylate.

The proportion of copolymer of olefin acrylate to triblock copolymer can vary significantly and still retain the peel strength before and after exposure to hydrolytic conditions. Generally, the copolymer of olefin acrylate comprises from about 20 to 80 weight percent of the tie layer of copolymer of olefin acrylate and the block copolymer. A preferred quantity of copolymer of olefin acrylate is from about 40 to 75 weight percent of the copolymer of olefin acrylate and the triblock copolymer. The peel strength and resistance to hydrolylic conditions remains very good in these ranges and many times outside these ranges as well.

The multilayer structures can be readily prepared by standard techniques, including co-extrusion through a feedblock or combination in the die. The thickness of the layers may vary substantially and are obviously somewhat dependent upon the final use to which the multilayer structure will be applied. Generally from about 0.25 mil to about 60 mil thickness of each outer layer can be employed. The layers, however, are preferably from about 0.5 to 30 mil. The tie layer is usually significantly thinner than the outer layer. Normally the tie layer will be thinner than 1 mil. Tie layers of up to 5 mil can also be employed.

With reference to the outer layer, it need not be the final outer layer of the structure. It is only "outer" with respect to the tie layer. Each of the aromatic polycarbonate and polyolefin layers may also be adjacent to layers of other polymers or even a thin metal strip.

The multilayer structure may comprise a simple laminate useful, for example, as a tray or can be thermoformed or blow-molded into a variety of structures including containers of various types.

Below are examples of the invention. They are intended to exemplify the broad nature of the invention rather than be restrictive of the broad concept.

In these examples, the olefin acrylate copolymer employed was ethylene ethyl acrylate - (EEA), the polymer DPD6169 obtained from Union Carbide. This polymer is about 82 weight percent ethylene and 18 weight percent ethyl acrylate.

The unsaturated triblock copolymer of styrene-butadiene-styrene is obtained from Phillips as KRO3 resin (KRO3).

The Kraton G1650 series of resins are obtained from Shell and are selectively hydrogenated triblock copolymer of styrene-butadiene-styrene with molecular weights ascending in the order of 1652, 1650, 1651.

Kraton G1726 is a blend of a selectively hydrogenated triblock copolymer of styrene-butadiene-styrene (30 weight %) and selectively hydrogenated diblock styrene-butadiene (70 weight %).

Kraton G1657 has 14 weight percent styrene and 86 weight percent butadiene and is a selectively hydrogenated triblock styrene-butadiene-styrene.

Kraton D1107 is a styrene-isoprene-styrene block copolymer from Shell.

Kraton D1101 is a styrene-butadiene-styrene block copolymer from Shell.

Stereon 840A is a random block copolymer from Firestone.

The ethylene methacrylate (EMA) copolymer is obtained from Gulf as pelleted PE220TT. It is 80 weight percent ethylene and 20 weight percent methylacrylate.

In the examples below the peel strength is measured as the Instron T peel strength in kilograms of force necessary per linear meter. The samples were physically inspected before and after autoclaving at a given temperature for clarity of the layers, particularly at the interface. The formation of stars or "snowflaking" at an interface sometimes occurs after exposure to the hydrolytic condition of autoclaving. Additionally after flexing the materials, voids will often appear at the layer interface indicating that adhesion between the layers has been diminished.

Polypropylene and bisphenol-A polycarbonate films were extruded at temperatures of from about 215°C to 265°C. These films were then heat sealed at 224°C and 4.93 $\times$ 10$^4$ kg/m for 15 seconds utilizing the indicated tie layer compositions to produce the multi-layered structures of the present invention. Drying the sample for three hours at 250°F appears to provide greater resistance to snowflake appearance.

EXAMPLES

| EXAMPLE | COMPOSITION WT. % | | THICKNESS (MIL) | PEEL STRENGTH kg/m PEEL | | SNOWFLAKES |
|---|---|---|---|---|---|---|
| | | | | AS IS | AUTOCLAVED 270°F/20 MIN | |
| 1 | Kraton D1101 | | | 334 | 388 | NO |
| 2 | Kraton G1652 | | | 438 | 286 | NO |
| 3 | Kraton G1657 | | | 165 | 145 | — |
| 4 | Kraton G1726 | | | 143 | 136 | — |
| 5 | Stereon 840A | | | 357 | 102 | — |
| 6 | KRO3 30 | EEA 70 | 17 | 213 | 97 | YES |
| | 50 | 50 | 20 | 130 | 54 | YES |
| | 70 | 30 | 19 | 109 | 21 | NO |
| 7 | Kraton 1652 30 | EMA 70 | 25 | 302 | 25 | NO |
| | 50 | 50 | 20 | 331 | 38 | NO |
| | 70 | 30 | 30 | 424 | 73 | NO |
| 6 | Kraton 1651 25 | EEA 75 | — | 218 | 241 | YES |
| | 50 | 50 | — | 327 | 309 | NO |
| 7 | Kraton 1652 30 | EEA 70 | 15 | 336 | 170 | YES |
| | 50 | 50 | 24 | 438 | 298 | NO |
| | 70 | 30 | 56 | 361 | 98 | NO |

The superiority of the systems of the invention is clear.

## Claims

1. A composition comprising an admixture of a copolymer of an olefin and an acrylate monomer and a block copolymer of vinylaromatic and aliphatic diene, said olefin acrylate copolymer present in quantities of from about 20 to about 80 weight percent of the copolymer and th block copolymer combined.

2. The composition in accordance with claim 1 wherein the copolymer of olefin and acrylate monomer is from about 40 to 75 weight percent.

3. The composition in accordance with claim 2 wherein the olefin in the copolymer is from about two to about ten carbon atoms and the ester group of the acrylate is alkyl of from one to six carbon atoms, inclusive, or cycloalkyl of four to six carbon atoms, inclusive, and in the block copolymer the vinylaromatic is a styrene or substituted styrene and the aliphatic diene is butadiene or isoprene.

4. The composition in accordance with claim 3 wherein the olefin in the copolymer is from two to four carbon atoms, inclusive, the ester in the acrylate is alkyl from two to four carbon atoms, inclusive, and in the block copolymer the vinylaromatic is styrene and the aliphatic diene is butadiene.

5. The composition in accordance with claim 4 wherein the olefin is ethylene, and the acrylate is ethylacrylate.

6. The composition in accordance with claim 4 wherein the block copolymer is selectively hydrogenated.

7. The composition in accordance with claim 5 wherein the block copolymer is selectively hydrogenated.

8. A multilayer structure comprising an outer layer of aromatic polycarbonate, an outer layer of a polyolefin, said outer layer tied together with a tie layer disposed between the outer layers comprising a block copolymer of vinylaromatic and aliphatic diene.

9. The composition in accordance with claim 8 wherein in the block copolymer the vinylaromatic is a styrene or substituted styrene and the aliphatic diene is butadiene or isoprene.

10. The composition in accordance with claim 9 wherein in the block copolymer the vinylaromatic is styrene.

11. The composition in accordance with claim 10 wherein the block copolymer is selectively hydrogenated.

12. The composition in accordance with claim 10 wherein the block copolymer is a random block.

13. The composition in accordance with claim 10 wherein the block copolymer is a diblock.

14. The composition in accordance with claim 10 wherein the block copolymer is a triblock.

15. The composition in accordance with claim 9 wherein admixed in the tie layer is a copolymer of an olefin and acrylate monomer.

16. The composition in accordance with claim 15 wherein the copolymer of olefin and acrylate monomers is from about 20 to about 80 weight percent of the copolymer of olefin and acrylate monomers and block copolymer.

17. The composition in accordance with claim 16 wherein the copolymer of olefin and acrylate monomers is from about 40 to 75 weight percent.

18. The composition in accordance with claim 16 wherein the olefin in the copolymer is from about two to about ten carbon atoms, inclusive and the ester group of the acrylate is one to six carbon atoms, inclusive.

19. The composition in accordance with claim 18 wherein the olefin in the copolymer is from two to four carbon atoms, inclusive, and the ester in the acrylate is alkyl from two to four carbon atoms, inclusive.

20. The composition in accordance with claim 19 wherein the olefin is ethylene and the acrylate is ethylacrylate.

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 046 402 (JOHNSON & JOHNSON) * Claims * | 1-5 | C 09 J 3/14 C 08 L 23/08 C 08 L 33/08 C 08 L 53/02 B 32 B 27/00 |
| X | DE-A-2 343 870 (BASF) * Claims; page 2, paragraph 8; page 3, paragraphs 4,5; page 5, paragraph 2 * | 1-20 | |
| P,X | US-A-4 543 292 (H.F. GILES et al.) * Claims * & EP - A - 188 723 | 1 | |

TECHNICAL FIELDS SEARCHED (Int. Cl.4)

C 09 J
C 08 L

The present search report has been drawn up for all claims

| Place of search | Date of completion of the search | Examiner |
|---|---|---|
| THE HAGUE | 20-08-1986 | FOUQUIER J.P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82